# EUROPEAN PATENT APPLICATION

(11) **EP 1 154 262 A1**
(43) Date of publication of application: **14.11.2001**
(21) Application number: 00201672.3
(22) Date of filing: 10.05.2000
(51) Int. Cl.: G01N 21/89, G01N 21/35

(54) **Apparatus for identifying articles which are at least partly made from at least one polymer**

(71) Applicant: DSM N.V., 6411 TE Heerlen (NL)
(72) Inventor: Berghmans, Antonius Christianus, 6216 XS Maastricht (NL); Huys, Michel Joseph Germain, 3500 Hasselt (BE)
(74) Representative: Kleiborn, Paul Erik

(57) **Abstract**

The invention relates to an apparatus for identifying articles, said apparatus comprising:
a) an optical spectrometer (1)
b) a transport system, said transport system comprising a transport rail (2) and transport units (3), the transport units comprising a body (4), coupling means (5) for fixing the articles (6) to the transport units, and a carriage (7), the carriage being movable along the transport rail
c) a guide system (8,9) which is capable of cooperating with the body and/or coupling means, said guide system at least being present in the area of the optical spectrometer.

## Description

The invention relates to an apparatus for identifying articles. WO-A-9906160 describes an apparatus for identifying carpets, said apparatus comprising an optical identification unit and a transport system (referred to as guide system in WO-A-9906160), said transport system comprising a transport rail and transport units, the transport units comprising a body, coupling means for fixing the articles to the transport units, and a carriage, the carriage being movable along the transport rail. In the known apparatus the coupling means are provided with openings through which a piece of carpet which is fixed to said coupling means can be irradiated. During operation of the apparatus the transport units to which the carpets are connected, are moved past the optical identification unit, while the surfaces of the carpet in the openings of the coupling means are kept in a predetermined transverse position.

It is possible to use an optical spectrometer as identification unit, and to analyze the spectral response of an irradiated surface to identify articles as to the type of polymer. In particular if the spectral responses of the different polymers to be identified are only slightly different, small variations in measuring conditions can make the distinction between such polymers difficult. This is for instance the case if it is to be distinguished between different types of polyamides, for instance between polyamide-6 and polyamide-6,6 of which the near-infrared spectra are only slightly different. If the apparatus of WO-A-9906160 is used it appears to be difficult to distinguish between materials of which the responses following irradiation are only slightly different.

In view of the above it is the goal of the invention to provide an apparatus which does not have this disadvantage, or which has this disadvantage to a considerable lesser extent.

The invention provides an apparatus for identifying articles, said apparatus comprising:
a) an optical spectrometer
b) a transport system, said transport system comprising a transport rail and transport units, the transport units comprising a body, coupling means for fixing the articles to the transport units, and a carriage, the carriage being movable along the transport rail
c) a guide system which is capable of cooperating with the body and/or coupling means, said guide system at least being present in the area of the optical spectrometer.

When using the apparatus according to the invention, a very accurate identification is achieved.

As used herein "present in the area of the optical spectrometer" denotes that the guide system has such a position that it is capable of cooperating with the body and/or coupling means while the transport units are moved past the optical spectrometer.

In a preferred embodiment the guide system comprises a guiding element which is essentially parallel to the transport rail, said guiding element being capable of cooperating with the body and/or coupling means. The guiding element may for instance be a guide rail. Preferably, the body and/or coupling means comprise one or more guiding members which can cooperate with the guiding element. More preferably, the body and/or coupling means comprise at least two guiding members which can cooperate with the guiding element. Preferably, the guiding members are rotatable elements, such as for instance wheels.

In a preferred embodiment the guide system comprises a pair of guiding elements which are essentially parallel to the transport rail and which are capable of receiving the body and/or coupling means. The pair of guiding elements may for instance be a pair of guide rails.

In a preferred embodiment, the guide system is a transversal guide system. A transversal guide system includes any system which is capable of preventing movement of the body and/or coupling means in the transversal direction, in particular in the direction of the irradiation beam or irradiation beams of the optical spectrometer.

In another preferred embodiment, the guide system is a longitudinal guide system. A longitudinal guide system includes any system which is capable of preventing movement of the body and/or coupling means around the transversal direction, in particular around an axis parallel to the irradiation beam or the irradiation beams of the optical spectrometer.

Most preferably, the guide system includes a transversal guide system and a longitudinal guide system.

Preferably, the coupling means have openings through which an article which is coupled with said coupling means can be irradiated with an irradiation beam.

The invention is not limited to a specific type of optical spectrometer. A Raman spectrometer may for instance be used. Preferably the optical spectrometer is an infrared spectrometer. As used herein infrared spectrometers also include mid-infrared spectrometers and near-infrared spectrometers. A very suitable spectrometer has been described in WO-A-9725605, the contents of which are herewith incorporated by reference. A near-infrared spectrometer is very suitable for distinguishing between polyamide-6 and polyamide 6,6. Methods for analyzing the spectral response of a surface are known to the skilled person, and are for instance described in "Multivariate Calibration", by Harald Martens and Tormod Naes, John Wiley & Sons (1991) Great Brittain.

In a preferred embodiment the coupling means are up and downward movable, the body is provided with a pulley for the up and downward movement of the coupling means, the pulley is movable by a friction element and a contact rail is present in the area of the optical spectrometer which can cooperate with the friction element.

As a carriage may be used any means which can be movably fixed to the transport rail.

The body forms the connection between the carriage and the coupling means.

The invention also relates to a process for identifying articles which are at least partly made from at least one polymer, in which process the apparatus according the invention is used.

The process according to the invention is in particular suitable if at least part of the articles are at least partly made from a polyamide, for instance polyamide-6 and/or polyamide 6,6. The process according to the invention is very well suitable to distinguish between polymers of which the spectral response following irradiation is only slightly different, such as for instance polyamide-6 and polyamide-6,6. If it is to be distinguished between polyamide-6 and polyamide-6,6, PET and polypropylene, which are typical materials for face fibres of carpets, it is advantageous to use spectral information in the range of 2000 to 3000 nm, preferably 2200 to 2600 nm.

The process according to the invention is very well suitable if the articles are textile articles, more in particular carpet or carpet materials, since in particular for these types of articles the problem often plays a role that a part of the surface which is in a predetermined position is generally surrounded by a part of the surface which is not in said predetermined position. Waste textile articles, waste carpets and/or waste carpet materials can very well be identified using the process according to the invention.

### Brief description of the drawing

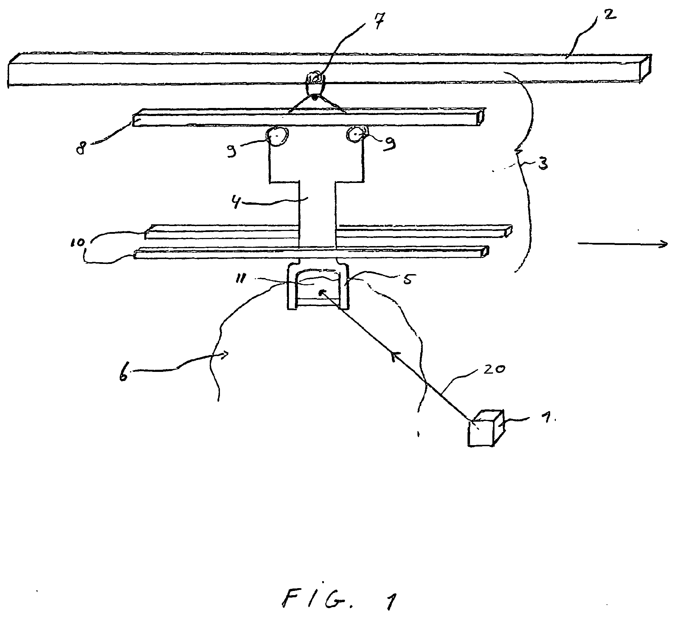

Figure 1 shows a preferred embodiment of the apparatus according according to the invention.

### Description of a preferred embodiment

Figure 1 shows a transport rail (2) and one transport unit (3) in the area of near-infrared (NIR) spectrometer (1). The arrow indicates the direction of transport. Transport unit (3) comprises a carriage (7) which can be moved in transport rail (2) using a chain (not shown), clamp (5) (coupling means), and a body (4) which connects clamp (5) and carriage (7). A carpet (6) is fixed to clamp (5), having opening (11) through which a part of carpet (6) can be irradiated with the irradiation beam of optical spectrometer (1). In this figure carpet (6) is in a position that it can be irradiated through opening (11) with irradiation beam (20). At its upper part, body (4) is provided with two wheels (9) (guiding members) which can cooperate with guide rail (8). The combination of two wheels (9) and guide rail (8) prevent rotation around an axis parallel to irradiation beam (20). This improves the accuracy of the identification. A pair of guide rails (10) (guiding elements) is also present. Body (4) can be guided between said pair of guide rails (10). This prevents movement of the body (4) and clamp (5) in the transverse direction, which improves the accuracy of the identification. An accurate identification can take place during movement of the carpet past NIR spectrometer (1). The tranport system may for instance be provided with 50 transport units. The transport rate may for instance be 1000 m/hour.

## Claims

1. Apparatus for identifying articles, said apparatus comprising:
a) an optical spectrometer (1)
b) a transport system, said transport system comprising a transport rail (2) and transport units (3), the transport units comprising a body (4), coupling means (5) for fixing the articles (6) to the transport units, and a carriage (7), the carriage being movable along the transport rail
c) a guide system (8,9) which is capable of cooperating with the body and/or coupling means, said guide system at least being present in the area of the optical spectrometer.

2. Apparatus according to claim 1, **characterized in that** the guide system comprises a guiding element (8) which is essentially parallel to the transport rail, said guiding element being capable of cooperating with the body and/or coupling means.

3. Apparatus according to claim 2, **characterized in that** the body and/or coupling means comprise one or more guiding members (9) which can cooperate with the guiding element.

4. Apparatus according to claim 3, **characterized in that** said one or more guiding members are rotatable elements.

5. Apparatus according to any one of claims 1 to 4, **characterized** the guide system comprises a pair of guiding elements (10) which are essentially parallel to the transport rail and which are capable of receiving the body and/or coupling means.

6. Apparatus according to any one of claims 1 to 5, **characterized in that** the guide system is a transversal guide system.

7. Apparatus according to any one of claims 1 to 6, **characterized in that** the guide system is a longitudinal guide system.

8. Apparatus according to any one of claims 1 to 7, **characterized in that** the optical spectrometer is an infrared spectrometer.

9. Apparatus according to any one of claims 1 to 8, **characterized in that** the coupling means have openings (11) through which an article which is coupled with said coupling means can be irradiated with an irradiation beam.

10. Process for identifying articles which are at least partly made from at least one polymer, **characterized in that** an apparatus is used according to any one of claims 1 to 9.

11. Process according to claim 10, **characterized in that** at least part of the articles are at least partly made from a polyamide.

12. Process according to claim 11, **characterized in that** at least part of the articles are at least partly made from polyamide-6

13. Process according to claim 12, **characterized in that** at least part of the articles are at least partly made from polyamide-6 and that at least part of the articles are at least partly made from polyamide-6,6.

14. Process according to any one of claims 10 to 13, **characterized in that** the articles are textile articles

15. Process according to claim 14, **characterized in that** the textile articles are carpets or carpet materials.
